Europäisches Patentamt

European Patent Office

Office européen des brevets

(19)

(11) Veröffentlichungsnummer : **0 122 455 B1**

(12)
# EUROPÄISCHE PATENTSCHRIFT

(45) Veröffentlichungstag der Patentschrift :
23.12.87

(21) Anmeldenummer : 84102713.9

(22) Anmeldetag : 13.03.84

(51) Int. Cl.⁴ : **F 02 B 43/00**, F 02 D 19/02

(54) **Vorrichtung zur Einblasung von Flüssiggas.**

(30) Priorität : 09.04.83 DE 3312758

(43) Veröffentlichungstag der Anmeldung :
24.10.84 Patentblatt 84/43

(45) Bekanntmachung des Hinweises auf die Patenterteilung : 23.12.87 Patentblatt 87/52

(84) Benannte Vertragsstaaten :
DE FR GB IT NL

(56) Entgegenhaltungen :
EP-A- 0 084 175
EP-A- 0 086 348
FR-A- 2 315 004
GB-A- 2 113 304
US-A- 4 436 110

(73) Patentinhaber : ROBERT BOSCH GMBH
Postfach 50
D-7000 Stuttgart 1 (DE)

(72) Erfinder : Rijkeboer, Rudolf Coenraad
Tollenskade 39
NL-2274 LV Voorburg (NL)

EP 0 122 455 B1

## Beschreibung

### Stand der Technik

Die Erfindung geht aus von einer Vorrichtung zur Einblasung von Flüssiggas nach der Gattung des Hauptanspruchs. Es ist schon eine Vorrichtung zur Einblasung von Flüssiggas vorgeschlagen worden (EP-A-0 084 175) (Dokument gemäß Art. 54 (3) EPÜ), bei der jedoch ein unerwünschter Einfluß des Saugrohrdruckes stromabwärts der Drosselklappe auf das geregelte Flüssiggas-Luft-Gemischverhältnis besteht. Bei einer weiteren vorgeschlagenen Vorrichtung zur Versorgung einer Brennkraftmaschine mit Flüssiggas (EP-A-0 086 348) (Dokument gemäß Art. 54 (3) EPÜ) ist kein Verdampfer-Druckregelventil vorgesehen, sondern das Flüssiggas wird in flüssigem Zustand dem Zumeßventil zugeführt.

Vorgeschlagen wurde ebenfalls eine Vorrichtung (EP-A-0 121 807, gleiche Priorität wie der Anmeldungsgegenstand), bei der die Beeinflussung des Flüssiggas-Luft-Gemischverhältnisses nicht über ein Verdampfer-Druckregelventil erfolgt, sondern durch Änderung der Rückstellkraft auf das Luftmeßorgan.

### Vorteile der Erfindung

Die erfindungsgemäße Vorrichtung mit den kennzeichnenden Merkmalen des Hauptanspruchs hat demgegenüber den Vorteil, daß unabhängig von den sich ändernden Saugrohrdrücken stromabwärts der Drosselklappe ein Flüssiggas-Luft-Gemischverhältnis einregelbar ist, das an die Betriebskenngrößen der Brennkraftmaschine angepaßt werden kann.

### Zeichnung

Ausführungsbeispiele der Erfindung sind in der Zeichnung vereinfacht dargestellt und in der nachfolgenden Beschreibung näher erläutert. Es zeigen Figur 1 eine Einspritzanlage für Flüssiggas mit einem ersten Ausführungsbeispiel eines Steuerdruckregelventiles, Figur 2 ein zweites Ausführungsbeispiel eines Steuerdruckregelventiles, Figur 3 ein drittes Ausführungsbeispiel eines Steuerdruckregelventiles, Figur 4 ein viertes Ausführungsbeispiel eines Steuerdruckregelventiles.

### Beschreibung der Ausführungsbeispiele

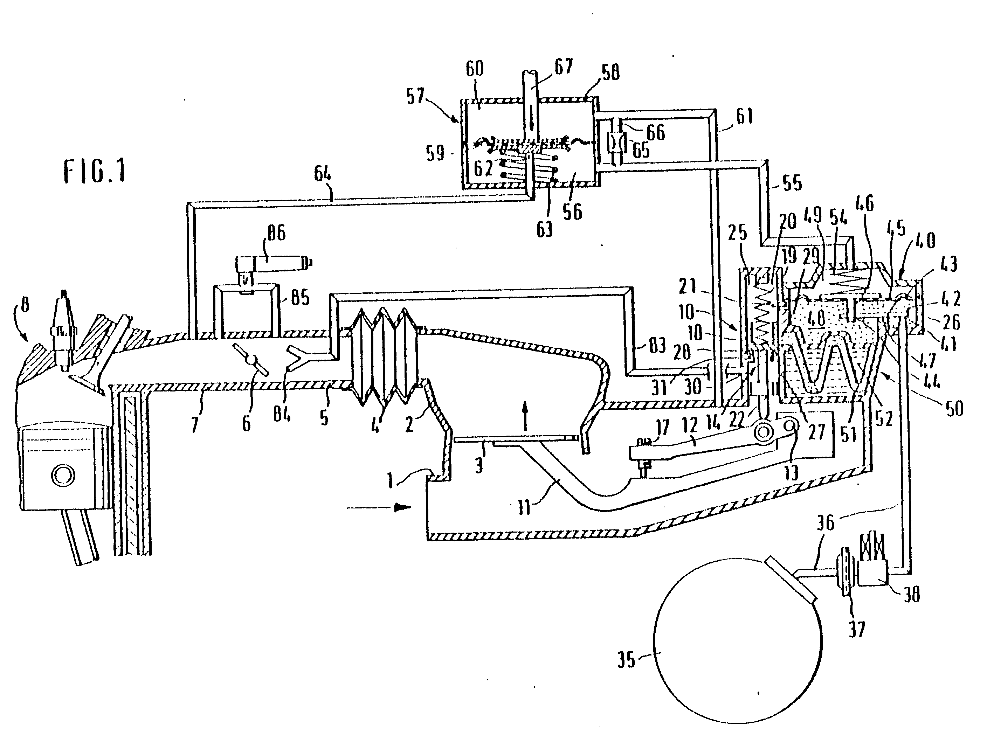

Bei der in Figur 1 dargestellten Einspritzanlage für Flüssiggas (LPG) strömt die Verbrennungsluft stromabwärts eines nicht dargestellten Luftfilters in Pfeilrichtung über einen Saugrohrabschnitt 1 in einen konischen Abschnitt 2, in dem ein Luftmeßorgan 3 angeordnet ist und weiterhin durch einen elastisch verformbaren Abschnitt 4 und einen Abschnitt 5 über eine Drosselklappe 6 zu einem Saugrohrabschnitt 7 und von dort zu einem oder mehreren Zylindern 8 einer Brennkraftmaschine, beispielsweise einer gemischverdichtenden einer selbstzündenden fremdgezündeten oder einer selbstzündenden Brennkraftmaschine. Das Luftmeßorgan 3 ist beispielsweise eine quer zur Strömungsrichtung angeordnete Stauklappe 3, die sich im konischen Abschnitt 2 des Saugrohres beispielsweise nach einer annähernd linearen Funktion der durch das Saugrohr stromenden Luftmenge bewegt, wobei durch eine konstante am Luftmeßorgan 3 angreifende Rückstellkraft sowie einen konstanten vor dem Luftmeßorgan 3 herrschenden Luftdruck der zwischen dem Luftmeßorgan 3 und der Drosselklappe 6 herrschende Druck ebenfalls konstant bleibt. Das Luftmeßorgan 3 steuert ein Zumeßventil 10. Zur Übertragung der Stellbewegung des Luftmeßorgans 3 dient ein mit ihm verbundener Schwenkhebel 11, der gemeinsam mit einem Korrekturhebel 12 an einem Drehpunkt 13 gelagert ist und bei seiner Schwenkbewegung ein als Zumeßkolben 14 ausgebildetes bewegliches Ventilteil des Zumeßventils 10 betätigt. An einer Gemischregulierschraube 17 zwischen Schwenkhebel 11 und Korrekturhebel 12 läßt sich das gewünschte Kraftstoff-Luft-Gemisch korrigieren. An dem dem Schwenkhebel 11 abgewandten Ende 18 des Zumeßkolbens 14 greift eine Rückstellfeder 19 an, die bestrebt ist, über den Zumeßkolben 14 das Luftmeßorgan 3 in seine Ausgangslage zu verschwenken, in der es bei nicht laufender Brennkraftmaschine den Saugrohrquerschnitt nahezu verschließt. Die Rückstellfeder 19 ist dabei in einem Federraum 20 angeordnet, der vorzugsweise über eine drosselnde Stichleitung 21 zu einem Verdampferraum 48 eines Verdampfer-Druckregelventils 40 entlüftet ist. An dem Schwenkhebel 11 zugewandten Ende 22 des Zumeßkolbens 14 herrscht der Saugrohrdruck im Saugrohrabschnitt 1 stromaufwärts des Luftmeßorgans.

Der Zumeßkolben 14 ist in einer Führungsbohrung 25 des Zumeß- und Verdampfergehäuses 26 gleitbar gelagert und ist mit einer Ringnut 27 versehen. Dem Schwenkhebel 11 abgewandt wird die Ringnut 27 durch eine axiale Begrenzungsfläche 28 begrenzt, die bei einer axialen Bewegung des Zumeßkolbens 14 eine in der Wandung der Führungsbohrung 25 ausgebildete Zumeßöffnung 29, beispielsweise in Form eines Schlitzes, mehr oder weniger zur Ringnut 27 hin öffnet. In die Ringnut 27 ragt eine Ringschulter 30 der Führungsbohrung 25, an der der Begrenzungsfläche 28 zugewandt ein Dichtring 31 anliegt, gegen den bei nicht strömender Luft im Abstellfall der Brennkraftmaschine die Begrenzungsfläche 28 des Zumeßkolbens 14 durch die Rückstellfeder 19 dichtend gepreßt wird.

Die Kraftstoffversorgung der Einspritzanlage erfolgt aus einem Flüssiggastank 35, der als ein speziell konstruierter Druckbehälter gestaltet ist und der Flüssiggas in gefülltem Zustand unter einem Druck von ca. 15 bis 20 bar aufnimmt. Eine Versorgungsleitung 36 führt vom Flüssiggastank 35 über einen Filter 37 und ein Unterbrecherventil 38, das bei abgeschalteter Anlage die Versorgungsleitung 36 schließt, zu dem Verdampfer-Druckregelventil 40. Die Versorgungsleitung 36 endet im Verdampfer-Druckregelventil 40 in einer Regeldüse 41, mit der beispielsweise das eine als bewegliches Ventilteil dienende Ende 42 eines zweiarmigen Hebels 43 derart zusammenarbeitet, daß der Ausströmquerschnitt der Regeldüse 41 mehr oder weniger geöffnet wird. An dem anderen Ende 44 des Hebels 43 greift eine als nachgiebige Wandung im Verdampfer-Druckregelventil 40 vorgesehene Verdampfermembran 45 über einen Betätigungsstift 46 an. Der Hebel 43 ist um einen Auflagerpunkt 47 schwenkbar. Die Verdampfermembran 45 trennt einen Verdampferraum 48 von einem Steuerraum 49. Der Verdampferraum 48 nimmt die Regeldüse 41, den Hebel 43 und das aus der Regeldüse 41 austretende Flüssiggas auf, das im Verdampferraum verdampft sowie auf einen bestimmten Druck entspannt wird und über eine durch einen Wärmetauscher 50 führende Speiseleitung 51 zur Zumeßöffnung 29 strömen kann. Durch den Wärmetauscher 50 kann beispielsweise das Kühlwasser 52 der Brennkraftmaschine strömen.

In dem Steuerraum 49 des Verdampfer-Druckregelventiles 40 ist eine Druckfeder 54 angeordnet, die sich an der Verdampfermembran 45 derart abstützt, daß sie bestrebt ist, das Ende 42 des Hebels 43 von der Regeldüse 41 abzuheben und damit eine größere Flüssiggasmenge austreten zu lassen. Von dem Steuerraum 49 des Verdampfer-Druckregelventils 40 führt eine Steuerdruckleitung 55 zu einer Steuerdruckkammer 56 eines Steuerdruckregelventiles 57.

Das Steuerdruckregelventil 57 weist ein Gehäuse 58 auf, das durch eine als bewegliches Ventilteil dienende Membran 59, die an ihrem Umfang eingespannt ist, in die Steuerdruckkammer 56 und eine Hochdruckkammer 60 geteilt wird. Die Hochdruckkammer 60 steht über eine Hochdruckleitung 61 mit dem Saugrohrabschnitt 1 stromaufwärts des Luftmeßorgans 3 in Verbindung. Die Membran 59 arbeitet mit einem festen Ventilsitz 62 zusammen und wird durch eine ebenfalls in der Steuerdruckkammer 56 angeordnete Regelfeder 63 in Öffnungsrichtung des Steuerdruckregelventiles beaufschlagt. Von dem Ventilsitz 62 führt eine Unterdruckleitung 64 zum Saugrohrabschnitt 7 stromabwärts der Drosselklappe 6. Hochdruckleitung 61 und Steuerdruckleitung 55 sind über eine Drosselstelle 65 miteinander verbunden, die beispielsweise in einer Verbindungsleitung 66 oder, wie nicht dargestellt ist, in der Membran 59 angeordnet sein kann. Mittels eines in die Hochdruckkammer 60 ragenden Betätigungsliedes 67 kann eine von Betriebskenngrößen der Brennkraftmaschine wie Temperatur, Drehzahl, Drosselklappenstellung, Abgaszusammensetzung und anderen abhängige Korrekturkraft in Schließrichtung des Steuerdruckregelventiles 57 an der Membran 59 angreifen. Durch Druckteilung zwischen der festen Drossel 65 und dem eine veränderliche Drossel darstellenden Steuerdruckregelventil 57 wird in der Steuerdruckleitung 55 und damit in dem Steuerraum 49 des Verdampfer-Druckregelventils 40 ein von der Kraft der Regelfeder 63 vorbestimmter konstanter Steuerdruck geregelt, dessen Wert durch Eingriff über das Betätigungsglied 67 korrigierbar ist. Der in dem Steuerraum 49 des Verdampfer-Druckregelventils 40 herrschende Steuerdruck bestimmt den im Verdampferraum 48 herrschenden Druck des verdampften Flüssiggases und damit den stromaufwärts der Zumeßöffnung 29 des Zumeßventils herrschenden Kraftstoffdruck, der neben der Stellung des Zumeßkolbens 14 gegenüber der Zumeßöffnung 29 die zugemessene Flüssiggasmenge und damit das der Brennkraftmaschine zugeführte Flüssiggas-Luft-Gemischverhältnis bestimmt. Wird die Brennkraftmaschine im Bereich der Vollast betrieben, so öffnet die Drosselklappe 6 nahezu den Saugrohrquerschnitt und der Saugrohrdruck stromabwärts der Drosselklappe 6 steigt über den durch die Regelfeder 63 am Steuerdruckregelventil 57 geregelten Steuerdruck, so daß dieser nun ebenfalls ansteigt, was zur Erzielung eines reicheren Kraftstoff-Luft-Gemisches während des Vollastbetriebes der Brennkraftmaschine erwünscht sein kann. Es kann auch erwünscht sein, daß bei einem Betrieb der Brennkraftmaschine nahe Vollast mit dem Erreichen des durch die Regelfeder 63 bestimmten Steuerdruckes des Steuerdruckregelventiles 57 das Steuerdruckregelventil durch eine über das Betätigungsglied 67 angreifende Kraft geschlossen wird, so daß der stromaufwärts des Luftmeßorgans 3 herrschende Luftdruck über die Hochdruckleitung 61 und die Drosselstelle 65 direkt im Steuerraum 49 des Verdampfer-Druckregelventils 40 wirksam wird und zu einer Anreicherung des Kraftstoff-Luft-Gemisches führt.

Die Wirkungsweise der Anlage ist folgende:

Beim Start der Brennkraftmaschine wird das Unterbrecherventil 38 geöffnet und das Flüssiggas strömt über die Versorgungsleitung 36 zur Regeldüse 41 des Verdampfer-Druckregelventiles 40, durch das ein konstanter, jedoch in Abhängigkeit von Betriebskenngrößen der Brennkraftmaschine durch den Steuerdruck im Steuerraum 49 änderbarer Druck des verdampften Flüssiggases einregelbar ist. Das im Verdampferraum 48 verdampfte Flüssiggas durchströmt über die Speiseleitung 51 den Wärmetauscher 50 und wird durch das noch eine niedrige Temperatur aufweisende Kühlwasser, dem die erforderliche Verdampfungswärme entzogen wird, gekühlt, so daß das Gas eine höhere Dichte aufweist, als bei wärmerem Kühlwasser nach dem Abschluß der Warmlaufphase der Brennkraftmaschine. Diese höhere Dichte führt zu einer größeren zugemessenen Gasmenge am Zumeßventil 10 und damit zu einer Anreicherung des der Brennkraftmaschine zugeführten Gemisches. Mit dem Start saugt die Brennkraftmaschine über das Saugrohr 1 Luft an, durch die das Meßorgan 3 eine gewisse Auslenkung aus seiner Ruhelage erfährt. Entsprechend der Auslenkung des Meßorgans 3 wird über den Hebel 11 auch der Zumeßkolben 14 verschoben, dessen Begrenzungsfläche 28 entsprechend der Stellung des Zumeßkolbens 14 mehr oder wenigen die Zumeßöffnung 29 zur Ringnut 27 hin öffnet, so daß in Abhängigkeit von der durch das Luftmeßorgan 3 ermittelten angesaugten Luftmenge eine entsprechende Gasmenge am Zumeßventil 10 zugemessen wird, die über eine mit der Ringnut 27 des Zumeßkolbens 14 in Verbindung stehende Einblaseleitung 83 beispielsweise zum Saugrohrabschnitt 5 geführt und über eine oder mehrere Düsen 84 stromaufwärts der Drosselklappe 6 in den Saugrohrabschnitt 5 eingeblasen wird. Zur Steuerung einer größeren Gemischmenge während des Warmlaufes der Brennkraftmaschine ist am Saugrohr 5, 7 ein die Drosselklappe 6 umgehender Bypass 85 vorgesehen, dessen Querschnitt während der Warmlaufphase der Brennkraftmaschine in bekannter Weise durch ein Zusatzgemischventil 86 temperaturabhängig gesteuert wird.

Die direkte Verbindung zwischen Meßorgan 3 und Zumeßkolben 14 bewirkt ein bestimmtes Verhältnis zwischen angesaugter Luftmenge und zugemessener Gasmenge. Wird aufgrund bestimmter Betriebsbedingungen beispielsweise eine Anreicherung des der Brennkraftmaschine zugeführten Gas-Luft-Gemisches gewünscht, kann durch das Steuerdruckregelventil 57 in dem Steuerraum 49 des Verdampfer-Druckregelventils 40 ein relativ höherer Druck gesteuert werden, der durch eine größere Öffnung des Verdampfer-Druckregelventiles 40 zu einem höheren Druck des Verdampften Flüssiggases an der Zumeßöffnung 29 führt, wodurch infolge des größeren Druckgefälles durch das Zumeßventil 10 eine größere Gasmenge zugemessen und über die Düse 84 eingeblasen wird.

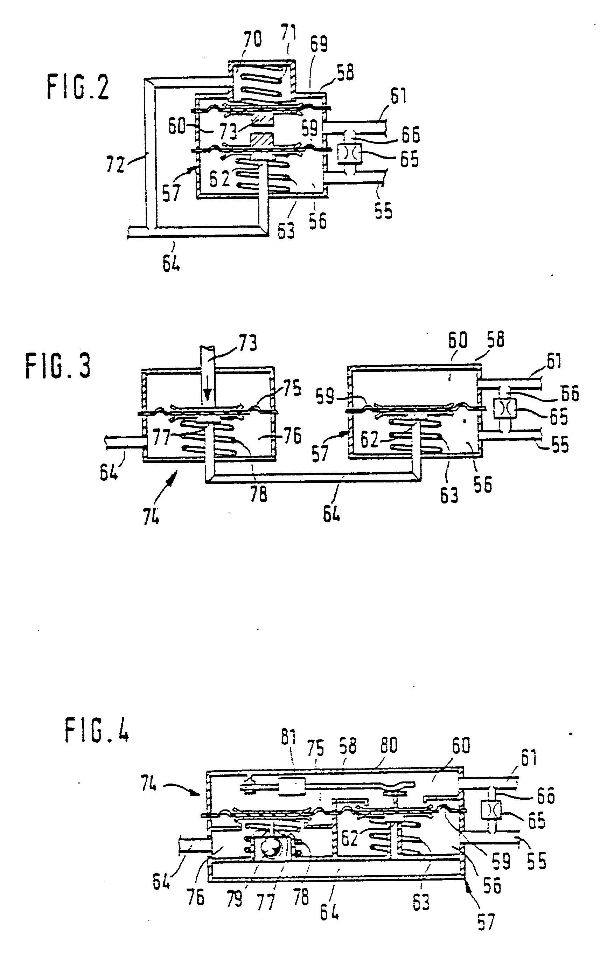

Bei dem in Figur 2 dargestellten zweiten Ausführungsbeispiel eines Steuerdruckregelventils 57 sind die gleichwirkenden Teile durch die gleichen Bezugszeichen gekennzeichnet, wie bei dem ersten Ausführungsbeispiel nach Figur 1. Dabei wird die Hochdruckkammer 60 der Membran 59 abgewandt durch eine nachgiebige Schaltmembran 69 von einer Unterdruckkammer 70 getrennt, in der eine an der Schaltmembran 69 angreifende Druckfeder 71 angeordnet und die mit der Unterdruckleitung 64 nach stromabwärts der Drosselklappe 6 über eine Koppelleitung 72 verbunden ist. Oberhalb eines durch die Kraft der Druckfeder 71 vorbestimmten Saugrohrdruckes in der Nähe des Vollastbetriebes der Brennkraftmaschine wird die Schaltmembran 69 so weit in Richtung zur Membran 59 bewegt, daß sie über einen Angriffskörper 73 an der Membran 59 angreift und diese gegen den Ventilsitz 62 preßt, so daß das Steuerdruckregelventil 57 geschlossen wird, wodurch wie bereits oben ausgeführt im Steuerraum 49 des Verdampfer-Druckregelventils 40 der Druck in der Hochdruckleitung 61 zur Wirkung kommt.

Bei dem Ausführungsbeispiel nach Figur 3 sind ebenfalls die gleichwirkenden Teile durch die gleichen Bezugszeichen gekennzeichnet. Hierbei ist in der Unterdruckleitung 64 stromabwärts des Steuerdruckregelventils 57 ein Absperrventil 74 angeordnet, das eine als nachgiebige Wand ausgebildete Absperrmembran 75 aufweist, in der in einer Federkammer 76 ein Ventilsitz 77 und eine in Öffnungsrichtung wirkende Feder 78 angeordnet ist. An der Absperrmembran 75 kann ein Angriffskörper 73 angreifen, der bei einem vorbestimmten Saugrohrdruck stromabwärts der Drosselklappe 6 in der Nähe des Vollastbetriebes der Brennkraftmaschine die Absperrmembran 75 gegen den Ventilsitz 77 preßt, so daß die über den Ventilsitz 77 geleitete Unterdruckleitung 64 und damit das Absperrventil 74 geschlossen wird und in dem Steuerraum 49 des Verdampfer-Druckregelventils 40 wie bereits oben ausgeführt nur noch der Druck in der Hochdruckleitung 61 herrscht.

Bei dem in Figur 4 dargestellten Ausführungsbeispiel sind die gegenüber den vorherigen Ausführungsbeispielen gleichwirkenden Teile durch die gleichen Bezugszeichen gekennzeichnet. Dabei ist die Membran 59 des Steuerdruckregelventiles 57 und die Absperrmembran 75 des Absperrventils 74 so in einem gemeinsamen Gehäuse 58 ausgespannt, daß sie einerseits die Hochdruckkammer 60 begrenzen. Stromabwärts des Ventilsitzes 62 ist die Unterdruckleitung 64 über den Ventilsitz 77 des Absperrventils 74 geleitet, in den ein Schließkörper 79 ragt, der andererseits mit der Absperrmembran 75 verbunden ist und in Schließrichtung durch die sich an der Absperrmembran 75 abstützende Feder 78 bewegbar ist. Wird die Differenz der Drücke in der Hochdruckkammer 60 und der Federkammer 76 kleiner als eine durch die Kraft der Feder 78 vorbestimmte Differenz, was in der Nähe des Vollastbetriebes der Brennkraftmaschine der Fall ist, so zieht die Absperrmembran 75 den Schließkörper 79 gegen den Ventilsitz 77, und das Absperrventil 74 wird geschlossen, wodurch wie oben ausgeführt in dem Steuerraum 49 der Druck in der Hochdruckleitung 61 wirksam wird. Ist während der Warmlaufphase der Brennkraftmaschine eine verstärkte Anreicherung des der Brennkraftmaschine zugeführten Flüssiggas-Luft-Gemisches erwünscht, so kann im Steuerdruckregelventil 57 eine Bimetallfeder 80 angeordnet sein, die an der Membran 59 derart angreift, daß das Steuerdruckregelventil 57 mehr geschlossen wird, so daß sich der in der Steuerdruckkammer 56 geregelte Steuerdruck und damit ebenfalls der Steuerdruck im Steuerraum 49 des Verdampfer-Druckregelventils 40 erhöht, wodurch die Regeldüse 41 mehr geöffnet wird und der Gasdruck in dem Verdampferraum 48 ansteigt. Nach Ablauf der Warmlaufphase der Brennkraftmaschine bzw. der Aufheizung der Bimetallfeder 80 durch einen elektrischen Heizkörper 81 biegt sich die Bimetallfeder 80 so weit in Richtung von der Membran 59 weg, daß sie keine Wirkung mehr auf die Membran 59 ausübt.

**Patentansprüche**

1. Vorrichtung zur Einblasung von Flüssiggas in das Saugrohr (5) einer Brennkraftmaschine (8) mit einem Verdampfer-Druckregelventil (40), das eine nachgiebige Wand (45) aufweist, durch die ein bewegliches Ventilteil (42) das Verdampfer-Druckregelventiles (40) betätigbar ist und an der einerseits der Druck des verdampften Flüssiggases und andererseits in einem mit einer Steuerdruckleitung (55) verbundenen Steuerraum (49) eine Druckfeder (54) und der in der Steuerdruckleitung (55) durch ein Steuerdruckregelventil (57) geregelte Druck einer Steuerluft angreift, an dessen beweglichem Ventilteil (59) einerseits der Saugrohrdruck stomaufwärts eines den Luftdurchsatz im Saugrohr (1, 2) stromaufwärts einer Drosselklappe (6) messenden Luftmeßorganes (3) herrscht und mit einem stromabwärts des Verdampfer-Druckregelventiles (40) angeordneten Zumeßventil (10), dessen als Zumeßkolben (14) ausgebildetes bewegliches Ventilteil durch das Luftmeßorgan (3) betätigt mehr oder weniger einen Zumeßquerschnitt (29) für den gasförmigen Kraftstoff zur zum Saugrohr (5) führenden Einblaseleitung (83) öffnet und einerseits von einer Rückstellfeder (19) und dem Druck des verdampften Flüssiggases im Verdampfer-Druckregelventil (40) und andererseitz vom Saugrohrdruck stromaufwärts des Luftmeßorganes (3) und vom Luftmeßorgan (3) beaufschlagbar ist, dadurch gekennzeichnet, daß das bewegliche Ventilteil (59) des Steuerdruckregelventiles (57) einen in einer mit der Steuerdruckleitung (55) verbundenen Steuerdruckkammer (56) angeordneten Ventilsitz (62) mehr oder weniger öffnet, von dem eine Unterdruckleitung (64) zum Saugrohr (7) stromabwärts der Drosselklappe (6) führt und daß die Steuerdruckkammer (56), in der eine das bewegliche Ventilteil (59) in Öffnungsrichtung des Steuerdruckregelventiles (57) beaufschlagende Regelfeder (63) angeordnet ist, von einer über eine Hochdruckleitung (61) mit dem Saugrohr (1) stromaufwärts des Luftmeßorgans (3) in Verbindung stehenden Hochdruckkammer (60) trennt, wobei die Hochdruckleitung (61) und die Steuerdruckleitung (55) über eine Drosselstelle (65) verbunden sind.

2. Vorrichtung nach Anspruch 1, dadurch gekennzeichnet, daß an dem beweglichen Ventilteil (59) des Steuerdruckregelventiles (57) eine von Betriebskenngrößen der Brennkraftmaschine abhängige Korrekturkraft (67, 80) in Schließrichtung des Steuerdruckregelventils (57) angreifen kann.

3. Vorrichtung nach Anspruch 2, dadurch gekennzeichnet, daß als bewegliches Ventilteil des Steuerdruckregelventiles (57) eine Membran (59) dient.

4. Vorrichtung nach Anspruch 3, dadurch gekennzeichnet, daß der Membran (59) des Steuerdruckregelventils (57) abgewandt, die Hochdruckkammer (60) durch eine nachgiebige Wand (69) von einer Unterdruckkammer (70) getrennt wird, in der eine an der nachgiebigen Wand (69) angreifende Druckfeder (71) angeordnet und die mit dem Saugrohr (7) stromabwärts der Drosselklappe (6) verbunden ist, wobei die nachgiebige Wand (69) oberhalb eines vorbestimmten Saugrohrdruckes stromabwärts der Drosselklappe (6) so auf die Membran (59) wirkt, daß das Steuerdruckregelventil (57) geschlossen wird.

5. Vorrichtung nach Anspruch 3, dadurch gekennzeichnet, daß stromabwärts des Steuerdruckregelventils (57) in der Unterdruckleitung (64) ein Absperrventil (74) angeordnet ist, das in Abhängigkeit von Betriebskenngrößen der Brennkraftmaschine geschlossen werden kann.

6. Vorrichtung nach Anspruch 5, dadurch gekennzeichnet, daß das Absperrventil (74) eine nachgiebige Wand (75) aufweist, die einerseits vom Saugrohrdruck (1) stromaufwärts des Luftmeßorganes (3) und andererseits vom Saugrohrdruck (7) stromabwärts der Drosselklappe (6) und eine Feder (78) beaufschlagbar ist und schließt, sobald die Differenz der Drücke beiderseits der nachgiebigen Wand (75) kleiner wird, als eine vorbestimmte Differenz.

7. Vorrichtung nach Anspruch 2, dadurch gekennzeichnet, daß als Korrekturkraft am beweglichen Ventilteil (59) des Steuerdruckregelventils (57) bei Temperaturen unterhalb der Motorbetriebstemperatur eine Bimetallfeder (80) in Schließrichtung des Steuerdruckregelventils (57) angreift.

**Claims**

1. Apparatus for the blowing-in of liquid gas into the intake pipe (5) of an internal combustion engine (8) with an evaporator pressure control valve (40) which has a compliant wall (45), by which a movable valve part (42) of the evaporator pressure control valve (40) can be operated and at which there acts on the one hand the pressure of the evaporated liquid gas and on the other hand, in a control space (49) connected to a control pressure line (55), a compression spring (54) and the pressure of a control air regulated in the control pressure line (55) by a control pressure control valve (57), at the movable valve part (59) of which there prevails on the one hand the intake pipe pressure upstream of an air-flow sensor (3) measuring the air throughput in the intake pipe (1, 2) upstream of a throttle valve (6), and with a metering valve (10), which is arranged downstream of the evaporator pressure control valve (40) and the movable valve part of which, designed as a metering plunger (14), opens, by being operated by the air-flow sensor (3), to a greater or lesser extent a metering cross-section (29) for the gaseous fuel to the blow-in line (83) leading to the intake pipe (5) and can be actuated on the one hand by a restoring spring (19) and the pressure of the evaporated liquid gas in the evaporator pressure control valve (40) and on the other hand by the intake pipe pressure upstream of the air-flow sensor (3) and by the air-flow sensor (3), characterized in that the movable valve part (59) of the control pressure control valve (57) opens to a greater or lesser extent a valve seat (62) arranged in a control pressure chamber (56), connected to the control pressure line (55), from which valve seat a vacuum line (64) leads to the intake pipe (7) downstream of the throttle valve (6), and in that the control pressure chamber (56), in which a control spring (63) actuating the movable valve part (59) in the opening direction of the control pressure control valve (57) is arranged, separates from a high pressure chamber (60) in connection via a high-pressure line (61) with the intake pipe (1) upstream of the air-flow sensor (3), the high-pressure line (61) and the control pressure line (55) being connected via a throttle point (65).

2. Apparatus according to Claim 1, characterized in that a corrective force (67, 80), dependent on the operating characteristics of the internal combustion engine, can act in closing direction of the control pressure control valve (57) at the movable part (59) of the control pressure control valve (57).

3. Apparatus according to Claim 2, characterized in that a diaphragm (59) serves as the movable valve part of the control pressure control valve (57).

4. Apparatus according to Claim 3, characterized in that, facing away from the diaphragm (59) of the control pressure control valve (57), the high-pressure chamber (60) is separated by a compliant wall (69) from a vacuum chamber (70), in which a compression spring (71), acting against the compliant wall (69) is arranged and is connected to the intake pipe (7) downstream of the throttle valve (6), the compliant wall (69) acting on the diaphragm (59) above a predetermined intake pipe pressure downstream of the throttle valve (6) in such a way that the control pressure control valve (57) is closed.

5. Apparatus according to Claim 3, characterized in that a shut-off valve (74) is arranged downstream of the control pressure control valve (57) in the vacuum line (64) and can be closed as a function of operating characteristics of the internal combustion engine.

6. Apparatus according to Claim 5, characterized in that a shut-off valve (74) has a compliant wall (75), which can be actuated on the one hand by the intake pipe pressure (1) upstream of the air-flow sensor (3) and on the other hand by the intake pipe pressure (7) downstream of the throttle valve (6) and a spring (78), and closes as soon as the difference in the pressures on either side of the compliant wall (75) becomes smaller than a predetermined difference.

7. Apparatus according to Claim 2, characterized in that, as corrective force at the movable valve part (59) of the control pressure control valve (57), a bi-metal spring (80) acts in closing direction of the control pressure control valve (57) at temperatures below the engine operating temperature.

**Revendications**

1. Dispositif pour l'injection de gaz liquéfié dans la tuyauterie d'aspiration (5) d'un moteur à combustion interne (8), avec une soupape de régulation de pression de l'évaporateur (40), qui possède une paroi élastique (45), au travers de laquelle est actionnable une partie de soupape mobile (42) de la soupape . de régulation de pression d'évaporateur (40) et sur laquelle agit, d'un côté la pression du gaz liquéfié vaporisé et de l'autre côté un ressort de pression (54), dans une enceinte de commande (55) grâce à la pression de l'air de commande, réglée dans la conduite de pression de commande (55), par une soupape de régulation de pression de commande (57), dont la partie mobile de soupape (59) commande d'un côté la pression dans la tuyauterie d'aspiration en amont d'un organe de mesure d'air (3), disposé en amont d'un clapet d'étranglement (6), mesurant le débit d'air dans la tuyauterie d'aspiration (1, 2) et d'une soupape de dosage (10) disposée en aval d'une soupape de régulation de pression de l'évaporateur (40), dont la partie de soupape mobile, conformée comme un piston de dosage (14), actionnée par l'organe de mesure d'air (3), ouvre plus ou moins une section de dosage (29) pour le combustible gazeux de la conduite d'injection (83) allant à la tuyauterie d'aspiration (5) et qui peut être soumis à l'action, d'un côté d'un ressort de rappel (19) et de la pression du gaz liquéfié vaporisé, dans la soupape de régulation de pression de l'évaporateur (40) et de l'autre côté, à la pression de la tuyauterie d'aspiration en amont de l'organe de mesure d'air (3) et venant de l'organe de mesure d'air (3), caractérisé en ce que la partie de soupape (59) mobile de la soupape de régulation de pression de commande (57) ouvre plus ou moins un siège de soupape (62) disposé dans une chambre de pression de commande (56) reliée à la conduite de pression de commande (55), à partir de laquelle mène une conduite de dépression (64) allant à la tuyauterie d'aspiration (7), en aval du clapet d'étranglement (6) et en ce que la chambre de pression de commande (56), dans laquelle est disposé un ressort de réglage (63) agissant sur la partie mobile de soupape (59), dans le sens de l'ouverture de la soupape de régulation de pression (57) est séparée d'une chambre de haute pression (60) reliée par une conduite à haute pression (61), à la tuyauterie d'aspiration (1), en amont de l'organe de mesure d'air (3), la conduite de haute pression étant à cette occasion reliée à la conduite de pression de commande (55), au moyen d'un point de laminage (65).

2. Dispositif selon la revendication 1, caractérisé en ce que sur la partie de soupape mobile (59) de la soupape de régulation de commande (57), une force de correction (67, 80), dépendant des caractéristiques de fonctionnement du moteur à combustion interne, peut agir dans le sens de la fermeture de la soupape de régulation de pression de commande (57).

3. Dispositif selon la revendication 2, caractérisé en ce qu'une membrane (59) sert de partie mobile à la soupape de la soupape de régulation de pression de commande (57).

4. Equipement selon la revendication 3, caractérisé en ce que du côté opposé à la membrane (59) de la soupape de régulation de pression de commande (57), la chambre de haute pression (60) est séparée par une paroi élastique (69), d'une chambre de dépression (70) dans laquelle est disposé un ressort de pression (71) agissant sur la paroi élastique et qui est reliée à la tuyauterie d'aspiration (7), en aval du clapet d'étranglement (6), faisant que la paroi élastique (69), au-dessus d'une certaine pression dans la tuyauterie d'aspiration, en aval du clapet d'étranglement, agit de telle sorte sur la membrane (59), que la soupape de régulation de pression de commande (57) est fermée.

5. Dispositif selon la revendication 3, caractérisé en ce qu'une soupape d'isolement (74) est disposée dans la conduite de dépression (64), en aval de la soupape de régulation de pression de commande (57) et qui peut être fermée en fonction des caractéristiques de fonctionnement du moteur à combustion interne.

6. Dispositif selon la revendication 5, caractérisé en ce que la soupape d'isolement (74) possède une paroi élastique (75), qui peut être soumise d'un côté à la pression dans la tuyauterie d'aspiration (1) en amont de l'organe de mesure d'air (3) et de l'autre côté à la pression dans la tuyauterie d'aspiration (7), en aval du clapet d'étranglement (6) et à un ressort et qui ferme, dès qu'une différence de pression des deux côtés de la paroi élastique (75) devient plus petite lorsqu'une différence prédéterminée est établie.

7. Dispositif selon la revendication 2, caractérisé en ce qu'un ressort bilame (80) agit en force de correction, sur la pièce mobile de soupape (59) de la soupape de régulation de pression de commande (57), pour des températures situées au-dessous de la température de fonctionnement du moteur, dans le sens de la fermeture de la soupape de régulation de pression de commande (57).

FIG.1

0 122 455

FIG.2

FIG.3

FIG.4